# EUROPEAN PATENT SPECIFICATION

(11) **EP 3 438 557 B1**
(45) Date of publication and mention of the grant of the patent: **13.05.2020**
(21) Application number: 18185626.1
(22) Date of filing: 25.07.2018
(51) Int. Cl.: F24D 19/00, B01D 29/00, F24H 9/02, F24H 9/12, F24D 3/18, F24F 5/00, F24H 4/02, F24H 9/00, F24D 3/10, F24F 1/26

(54) **HEAT PUMP HOT-WATER HEATER**
WÄRMEPUMPENWARMWASSERBEREITER
CHAUFFAGE À EAU CHAUDE PAR POMPE À CHALEUR

(30) Priority: 03.08.2017 JP 2017150378
(43) Date of publication of application: 06.02.2019
(73) Proprietor: Panasonic Intellectual Property Management Co., Ltd., Osaka-shi, Osaka 540-6207 (JP)
(72) Inventor: NOMURA, Masakazu, Osaka, 540-6207 (JP); FUJIMOTO, Takanobu, Osaka, 540-6207 (JP)
(74) Representative: Eisenführ Speiser

(56) References cited:
- EP-A1- 2 829 811
- EP-A1- 3 012 551
- EP-A1- 3 336 445
- EP-A2- 1 918 623
- WO-A1-91/05977
- WO-A1-2012/063223
- FR-A1- 2 567 631
- GB-A- 2 491 246

## Description

### BACKGROUND

### 1. Technical Field

The present disclosure relates to a heat pump hot-water heater.

### 2. Description of the Related Art

In a heat pump hot-water heater disclosed in Unexamined Japanese Patent Publication No. 2015-1356, a refrigerant circuit and a hot-water circuit for heating are arranged inside same exterior casing 101.

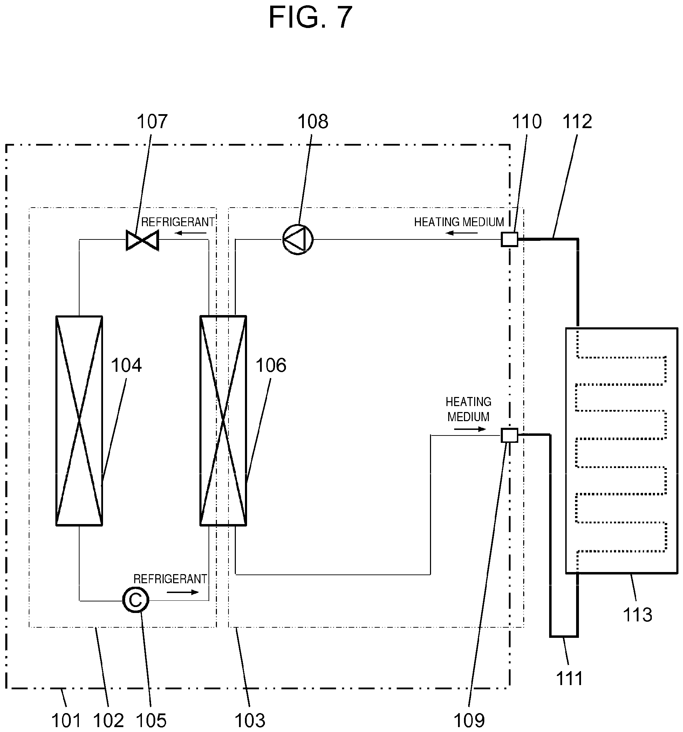

FIG. 7 is a schematic block diagram of a hot-water heating system of the heat pump hot-water heater disclosed in the above literature.

In FIG. 7, refrigerant circuit 102 is formed by connecting compressor 105, water-cooling medium heat exchanger 106, pressure-reducing device (expansion valve) 107, and air-cooling medium heat exchanger 104.

In addition, circulation pump 108 is arranged in hot-water circuit for heating 103. Driving of circulation pump 108 circulates a heating medium, such as water or antifreeze liquid, between water-cooling medium heat exchanger 106 and heating terminal 113.

Then, a high-temperature and high-pressure refrigerant compressed in compressor 105 heats the heating medium, such as water or antifreeze liquid, in water-cooling medium heat exchanger 106. The heated hot water or antifreeze liquid is conveyed to heating terminal 113 by circulation pump 108.

Heating terminal 113 is connected to hot-water circuit for heating 103 via heating medium forward port 109 and heating medium forward pipe 111, as well as heating medium return port 110 and heating medium return pipe 112. Heating terminal 113 and hot-water circuit for heating 103 constitute a closed circuit. Note that, heating medium forward port 109 and heating medium return port 110 are provided at a rear side of exterior casing 101 of the heat pump hot-water heater.

European patent application publication 3 012 551 A1 discloses a heat pump apparatus including a compressor for compressing refrigerant; a plate heat exchanger including a refrigerant inlet, a refrigerant outlet, a heat medium inlet and a heat medium outlet, and performing heat exchange between the refrigerant and heat medium; a decompressor for decompressing the refrigerant; and an evaporator for performing heat exchange between the refrigerant and air.

FR patent application 2 567 631 A1 and PCT patent application WO 91/05977 A1 disclose further heat pump apparatus.

### SUMMARY

However, in the conventional configuration, there is not arranged a filter that collects or removes iron powders or rust existing in the hot-water circuit for heating and the heating terminal and protects the circulation pump. This causes a problem of degrading durability of the circulation pump.

The present disclosure solves the above conventional problem and aims at providing a heat pump hot-water heater excellent in workability and maintainability.

To solve the above conventional problem, a heat pump hot-water heater of the present disclosure includes a refrigerant circuit configured by connecting a compressor, a water-cooling medium heat exchanger, a pressure-reducing device, and an evaporator; a heating medium circulating circuit in which a heating medium heated by the water-cooling medium heat exchanger circulates; and a circulation pump that is arranged in the heating medium circulating circuit and conveys the heating medium. The refrigerant circuit and the heating medium circulating circuit are arranged in one exterior casing. The heating medium circulating circuit is characterized in being provided with a filter that collects impurities.

Thus, during installation of the heat pump hot-water heater, at the time of connection work or the like of the heating medium forward pipe or the heating medium return pipe for connecting the heating medium circulating circuit and the heating terminal, additional mounting work of a filter becomes unnecessary and the heat pump hot-water heater excellent in workability can be provided.

According to the present disclosure, it is possible to provide a heat pump hot-water heater excellent in workability and maintainability.

Further, the exterior casing of the heat pump hot-water heater of the present disclosure has an opening provided at a position facing the filter, and an opening and closing plate that covers the opening and that is attached to or detached from the exterior casing. The heat pump hot-water heater further comprises a filter mounting part to which the filter is mounted, wherein a first heating medium pipe and a second heating medium pipe that constitute the heating medium circulating circuit are connected to a first end part and a second end part of the filter mounting part, respectively, the first heating medium pipe and the second heating medium pipe are pressure fitted and connected to the filter mounting part coaxially in series, the filter mounting part includes a filter storage part that stores the filter and a heating medium flow passage in which the heating medium flows, the filter storage part protrudes from the heating medium flow passage, and the filter storage part is positionable at an opening side of the exterior casing by rotating the filter mounting part with respect to the first heating medium pipe and the second heating medium pipe.

### BRIEF DESCRIPTION OF THE DRAWINGS

FIG. 1 is a schematic block diagram of a hot-water heating system of a heat pump hot-water heater according to a first exemplary embodiment of the present disclosure;
FIG. 2 is a perspective view illustrating external appearance of the heat pump hot-water heater according to the first exemplary embodiment of the present disclosure;
FIG. 3 is a side view of the heat pump hot-water heater according to the first exemplary embodiment of the present disclosure;
FIG. 4 is a perspective view illustrating external appearance of a filter mounting part according to the first exemplary embodiment of the present disclosure;
FIG. 5 is a partial cross-sectional view of the filter mounting part according to the first exemplary embodiment of the present disclosure;
FIG. 6A is a configuration diagram before connection of the filter mounting part and a heating medium pipe according to the first exemplary embodiment of the present disclosure;
FIG. 6B is a configuration diagram after connection of the filter mounting part and the heating medium pipe according to the first exemplary embodiment of the present disclosure; and
FIG. 7 is a schematic block diagram of a hot-water heating system of a conventional heat pump hot-water heater.

### DETAILED DESCRIPTION

A heat pump hot-water heater according to the present disclosure includes a refrigerant circuit configured by connecting a compressor, a water-cooling medium heat exchanger, a pressure-reducing device, and an evaporator; a heating medium circulating circuit in which a heating medium heated by the water-cooling medium heat exchanger circulates; and a circulation pump that is arranged in the heating medium circulating circuit and conveys the heating medium. The refrigerant circuit and the heating medium circulating circuit are arranged in one exterior casing. The heating medium circulating circuit is provided with a filter that collects impurities.

Thus, during installation of the heat pump hot-water heater, at the time of connection work or the like of the heating medium forward pipe or the heating medium return pipe for connecting the heating medium circulating circuit and the heating terminal, additional mounting work of a filter becomes unnecessary and the heat pump hot-water heater excellent in workability can be provided.

In the heat pump hot-water heater the exterior casing has an opening provided at a position facing the filter and an opening and closing plate that covers the opening and that is attached to or detached from the exterior casing.

Thus, since the opening is provided at a position facing the filter, at the time of a maintenance work of removing iron powders, rust, or the like accumulated in the filter, a worker can perform the maintenance work easily by detaching the opening and closing plate. Therefore, it is possible to provide a heat pump hot-water heater excellent in maintainability.

The heat pump hot-water heater further includes a filter mounting part to which the filter is mounted, and a first heating medium pipe and a second heating medium pipe that constitute the heating medium circulating circuit are connected to a first end part and a second end part of the filter mounting part, respectively. The first heating medium pipe and the second heating medium pipe are pressure fitted and connected to the filter mounting part coaxially in series.

Thus, since the first and second heating medium pipes are pressure fitted and connected to the filter mounting part coaxially in series, the worker, when performing the maintenance work of the filter, can rotate the filter mounting part in a direction facilitating the worker to perform working with respect to the heating medium pipes. Therefore, attachment or detachment of the filter stored in the filter mounting part is facilitated, and it is possible to provide a heat pump hot-water heater excellent in maintainability.

In the heat pump hot-water heater the filter mounting part includes a filter storage part that stores the filter and a heating medium flow passage in which the heating medium flows. The filter storage part is formed protruding from the heating medium flow passage.

Since the filter storage part is formed protruding from the heating medium flow passage, the worker, when performing the maintenance work of the filter, can rotate the filter mounting part with respect to the heating medium pipes and make only the filter storage part face the opening side of the exterior casing and get closer to the opening of the exterior casing. Therefore, attachment or detachment of the filter stored in the filter mounting part is facilitated, and it is possible to provide a heat pump hot-water heater excellent in maintainability.

In the heat pump hot-water heater according to an exemplary embodiment, a magnet is arranged in the filter storage part.

Thus, it is possible to collect metals, such as iron powders and rust, among impurities finer than filter meshes by a magnetic force of the magnet. Therefore, it is possible to provide a heat pump hot-water heater excellent in durability of the circulation pump.

Exemplary embodiments of the present disclosure will be described below with reference to the drawings. Note that, the present disclosure is not limited by the present exemplary embodiments.

### (First exemplary embodiment)

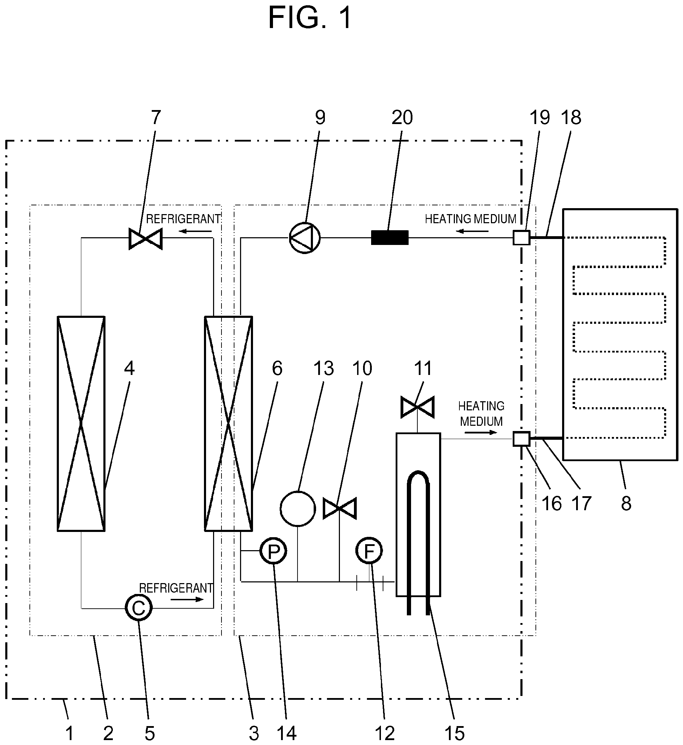

FIG. 1 is a schematic block diagram of a hot-water heating system of a heat pump hot-water heater according to a first exemplary embodiment of the present disclosure. In FIG. 1, arrows indicate a flow of a refrigerant or a heating medium, such as water or antifreeze liquid. The arrows of FIG. 1 indicate a movement of the heating medium when hot water is generated.

As shown in Fig. 1, the heat pump hot-water heater according to the present exemplary embodiment includes refrigerant circuit 2 and heating medium circulating circuit 3. Refrigerant circuit 2 and heating medium circulating circuit 3 are arranged in same exterior casing 1. Here, the "same exterior casing" can be called "one exterior casing".

Refrigerant circuit 2 is a heat source configured by sequentially and annularly connecting compressor 5 that compresses a refrigerant to a high temperature and high pressure, water-cooling medium heat exchanger 6 that exchanges heat between a heating medium, such as water or antifreeze liquid, and the refrigerant, pressure-reducing device (expansion valve) 7 that reduces a pressure of the refrigerant after the heat has been radiated by water-cooling medium heat exchanger 6, and evaporator 4 that exchanges heat between air and the refrigerant. Note that, the refrigerant that circulates in the refrigerant circuit may use R410A, R32, carbon dioxide, or the like.

Meanwhile, in heating medium circulating circuit 3, the heating medium, such as water or antifreeze liquid, flows from heating medium return port 19 toward water-cooling medium heat exchanger 6 by the drive of circulation pump 9. The heating medium is heated by the high-temperature and high-pressure refrigerant compressed in compressor 5 that flows through water-cooling medium heat exchanger 6. The heated high-temperature heating medium, such as water or antifreeze liquid, flows toward heating medium forward port 16.

Then, the high-temperature heating medium, such as water or antifreeze liquid, is conveyed to heating terminal 8 by the drive of circulation pump 9 and radiates heat in heating terminal 8, and then flows into heating medium circulating circuit 3 again via heating medium return port 19. The heating medium flows through filter mounting part 20, circulation pump 9, water-cooling medium heat exchanger 6, pressure relief valve 10, air vent valve 11, flow rate sensor 12, expansion tank 13, pressure gauge 14, and auxiliary heater 15. Then, the high-temperature heating medium, such as water or antifreeze liquid, is conveyed from heating medium circulating circuit 3 to heating terminal 8 via heating medium forward port 16.

Note that, filter mounting part 20 is arranged, in heating medium circulating circuit 3, between circulation pump 9 that circulates the heating medium and heating medium return port 19.

That is, the heat pump hot-water heater according to the present exemplary embodiment supplies, in heating medium circulating circuit 3, the heating medium, such as water or antifreeze liquid, heated and generated in water-cooling medium heat exchanger 6 of refrigerant circuit 2 to heating terminal 8 via heating medium forward pipe 17 that connects heating medium forward port 16 and heating terminal 8, and heats a living room. Thereafter, the heating medium returns to heating medium circulating circuit 3 via heating medium return pipe 18 that connects heating terminal 8 and heating medium return port 19. Thus, the heating medium, such as water or antifreeze liquid, circulates.

Note that, heating terminal 8 may be a panel-shaped external heat radiator, such as radiant heating and cooling, a panel heater, or a fan convector including a blower fan.

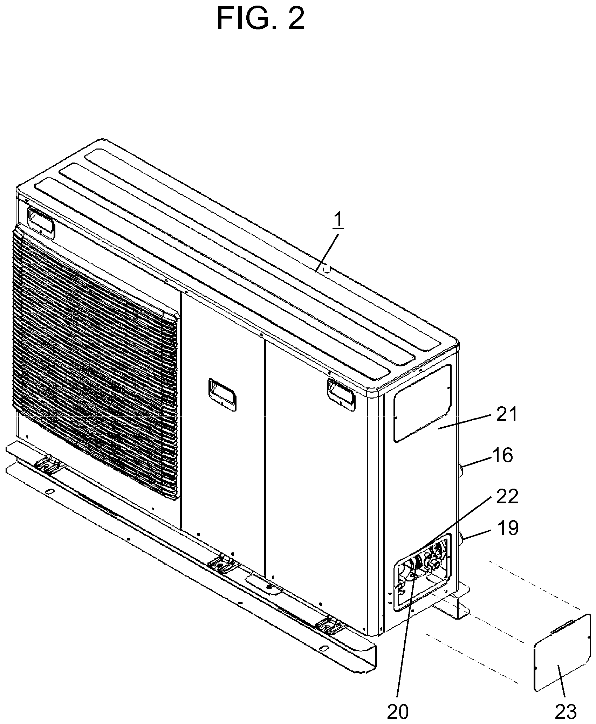

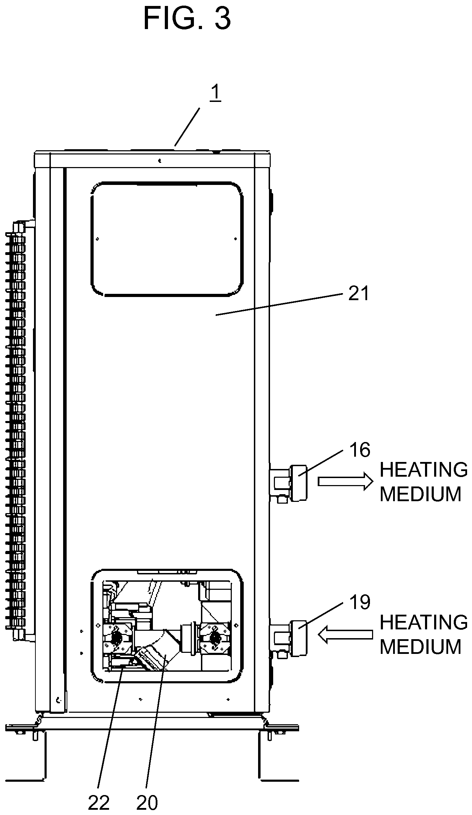

Next, a structure of the heat pump hot-water heater according to the present exemplary embodiment will be described with reference to FIGS. 2 and 3.

In FIGS. 2 and 3, heating medium forward port 16 that connects heating medium forward pipe 17 that connects heating medium circulating circuit 3 and heating terminal 8 to exterior casing 1 and heating medium return port 19 that connects heating medium return pipe 18 that connects heating medium circulating circuit 3 and heating terminal 8 to exterior casing 1 are provided at a rear face part of exterior casing 1.

In addition, in heating medium circulating circuit 3, filter mounting part 20 that is arranged between circulation pump 9 that circulates the heating medium and heating medium return port 19 is arranged at a position facing exterior side plate 21 that constitutes a side face part of exterior casing 1. Opening 22 is provided at a position facing filter mounting part 20 in exterior side plate 21. Opening 22 and opening and closing plate 23 are fastened and fixed with screws and opening 22 is normally blocked.

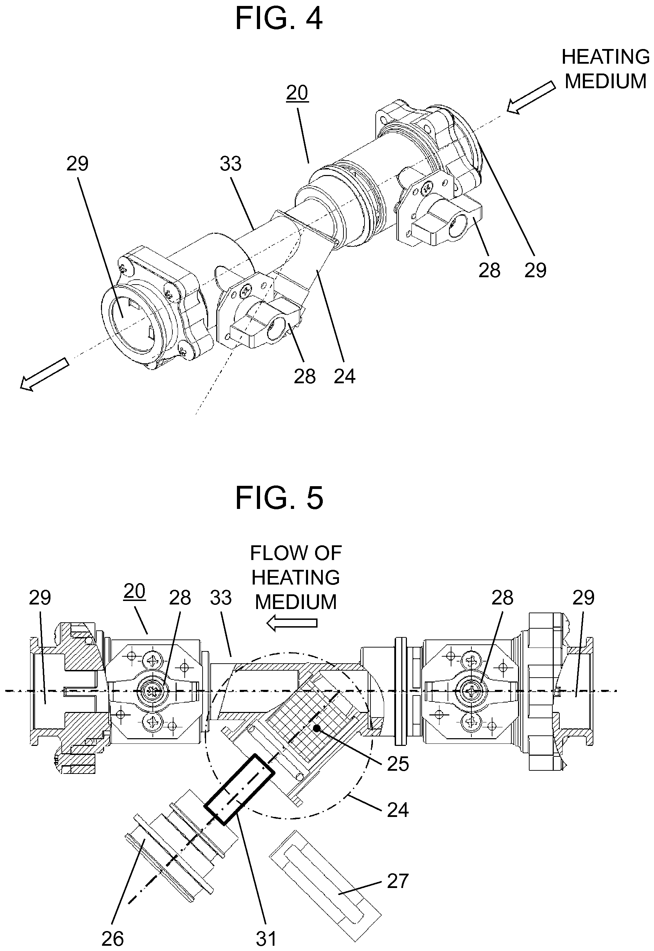

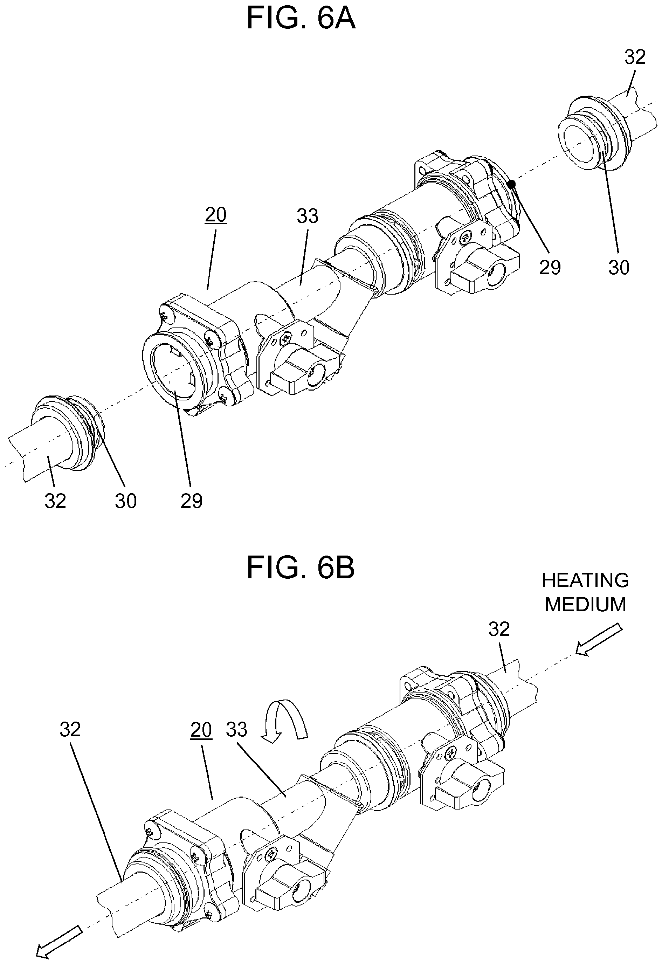

In addition, as shown in FIGS. 4, 5, 6A, and 6B, the heating medium, such as water or antifreeze liquid, flows through filter mounting part 20 in a horizontal direction. Filter storage part 24 is inclined to a downward side with respect to the horizontal direction from an upstream side of filter mounting part 20 toward a downstream side. Filter mounting part 20 has filter storage part 24 that protrudes to a downward side of heating medium flow passage 33 that is a flow passage of the heating medium of filter mounting part 20. Filter 25 is arranged being stored in filter storage part 24.

Filter 25 in filter mounting part 20 is stored with filter 25 arranged in heating medium circulating circuit 3, and has a function of collecting impurities, such as iron powders or rust, existing in heating medium circulating circuit 3 or heating terminal 8 when the heating medium, such as water or antifreeze liquid, passes through.

It is possible to attach or detach filter 25 to or from filter mounting part 20 by inserting or removing sealing plug 26 provided below filter storage part 24 and annular tightening fastener 27 that fastens and fixes filter storage part 24 and sealing plug 26.

Further, on both ends of filter mounting part 20, valves 28 having an opening and closing function are arranged with valves 28 sandwich filter 25. When filter 25 is attached or detached, both valves 28 are closed up and flow of the heating medium, such as water or antifreeze liquid, into filter mounting part 20 is blocked, and then maintenance work is performed.

In addition, on both end parts of filter mounting part 20, cylindrical recessed fitting parts 29 for connecting to heating medium pipes 32 are formed. Heating medium pipes 32 are connected to filter mounting part 20 so that heating medium flow passage 33 and heating medium pipes 32 are coaxially in series. The end part of heating medium pipe 32 is cylindrical projected fitting part 30 that adapts to cylindrical recessed fitting part 29 formed in filter mounting part 20.

In this cylindrical recessed and projected fitting connection, cylindrical projected fitting part 30 is inserted into cylindrical recessed fitting part 29 and pressure-fitted and connected thereto with the annular tightening fastener (not shown). This allows a worker to rotate filter mounting part 20 based on the same axis of heating medium pipes 32 connected to the both ends of filter mounting part 20. Note that, in the present exemplary embodiment, in the configuration of cylindrical recessed and projected fitting connection, cylindrical recessed fitting part 29 and cylindrical projected fitting part 30 are formed at the end part of filter mounting part 20 and at the end part of heating medium pipe 32, respectively. Not limited to this, cylindrical projected fitting part 30 and cylindrical recessed fitting part 29 may be formed at the end part of filter mounting part 20 and at the end part of heating medium pipe 32, respectively.

In addition, magnet 31 is provided in sealing plug 26 of filter 25. That is, magnet 31 is provided in filter storage part 24. Since magnet 31 is positioned at the center of cylindrical filter 25, metals, such as iron powders or rust, among impurities finer than the meshes of filter 25 are collected by the magnetic force of magnet 31.

As described above, the heat pump hot-water heater according to the present exemplary embodiment has effects as follows.

First, a heat pump hot-water heater according to the present exemplary embodiment includes refrigerant circuit 2 configured by sequentially connecting compressor 5, water-cooling medium heat exchanger 6, pressure-reducing device 7, and evaporator 4; heating medium circulating circuit 3 in which a heating medium heated by water-cooling medium heat exchanger 6 circulates; and circulation pump 9 that is arranged in heating medium circulating circuit 3 and conveys the heating medium. Refrigerant circuit 2 and heating medium circulating circuit 3 are arranged in one exterior casing 1.

Heating medium circulating circuit 3 is provided with filter 25 that has a function of collecting impurities. Thus, during installation of the heat pump hot-water heater, at the time of connection work or the like of heating medium forward pipe 17 or heating medium return pipe 18 for connecting heating medium circulating circuit 3 and heating terminal 8, additional mounting work of filter 25 becomes unnecessary. Therefore, it is possible to provide a heat pump hot-water heater excellent in workability.

In addition, the heat pump hot-water heater according to the present exemplary embodiment further includes opening 22 provided at a position facing filter 25 in exterior casing 1 and opening and closing plate 23 that covers opening 22 and is attached to or detached from exterior casing 1.

Thereby, since opening 22 is provided at a position facing filter 25, it is possible to facilitate a maintenance work of filter 25 by detaching opening and closing plate 23 at the time of maintenance work of removing iron powders or rust accumulated in filter 25. Therefore, it is possible to provide a heat pump hot-water heater excellent in maintainability.

Furthermore, heating medium pipes 32 are connected to both end parts of filter mounting part 20 so that heating medium flow passage 33 of filter mounting part 20 and heating medium pipes 32 are coaxially in series.

In addition, each of the end part of filter mounting part 20 and the end part of heating medium pipe 32 is cylindrical recessed fitting part 29 or cylindrical projected fitting part 30 that adapts to cylindrical recessed fitting part 29. Further, since cylindrical recessed fitting part 29 and cylindrical projected fitting part 30 are configured to be pressure-fitted and connected, it is possible to rotate filter mounting part 20 based on the same axis of heating medium pipes 32 connected to the both ends of filter mounting part 20.

Thereby, when a worker performs a maintenance work of filter 25, by rotating filter mounting part 20, it is possible to make sealing plug 26, which is formed protruding from heating medium flow passage 33 of filter mounting part 20 and provided below filter storage part 24 that is normally arranged directed downward, be positioned at opening 22 side of exterior side plate 21 and get closer to opening 22. Therefore, attachment or detachment of filter 25 to or from filter storage part 24 is facilitated, and it is possible to provide a heat pump hot-water heater excellent in maintainability.

As described above, the heat pump hot-water heater according to the present disclosure can provide a heat pump hot-water heater excellent in workability and maintainability, and thus can be also applied to a heat pump water heater and a heat pump hot-water heater not only for household use but also for business use.

## Claims

1. A heat pump hot-water heater comprising:
a refrigerant circuit (2) configured by connecting a compressor (5), a water-cooling medium heat exchanger (6), a pressure-reducing device (7), and an evaporator (4);
a heating medium circulating circuit (3) in which a heating medium heated by the water-cooling medium heat exchanger (6) circulates; and
a circulation pump (9) that is arranged in the heating medium circulating circuit (3) and conveys the heating medium,
wherein the refrigerant circuit (2) and the heating medium circulating circuit (3) are provided in one exterior casing (1),
**characterized in that**
the heating medium circulating circuit (3) is provided with a filter (25) that collects impurities, and
the exterior casing (1) has an opening (22) provided at a position facing the filter (25), and an opening and closing plate (23) that covers the opening (22) and that is attached to or detached from the exterior casing (1),
wherein the heat pump hot-water heater further comprises a filter mounting part (20) to which the filter (25) is mounted,
wherein a first heating medium pipe (32) and a second heating medium pipe (32) that constitute the heating medium circulating circuit (3) are connected to a first end part and a second end part of the filter mounting part (20), respectively,
the first heating medium pipe (32) and the second heating medium pipe (32) are pressure fitted and connected to the filter mounting part (20) coaxially in series,
the filter mounting part (20) includes a filter storage part (24) that stores the filter (25) and a heating medium flow passage (33) in which the heating medium flows,
the filter storage part (24) protrudes from the heating medium flow passage (33), and the filter storage part (24) is positionable at an opening side of the exterior casing (1) by rotating the filter mounting part (20) with respect to the first heating medium pipe (32) and the second heating medium pipe (32).

2. The heat pump hot-water heater according to claim 1, wherein a magnet (31) is provided in the filter storage part (24).

## Patentansprüche

1. Wärmepumpen-Warmwasserheizung, umfassend:
einen Kältemittelkreislauf (2), der durch Verbinden eines Verdichters (5), eines Wasser-Kühlmedium-Wärmetauschers (6), einer Druckminderungsvorrichtung (7) und eines Verdampfers (4) gebildet ist;
einen Heizmedium-Zirkulationskreislauf (3), in dem ein durch den Wasser-Kühlmedium-Wärmetauscher (6) erwärmtes Heizmedium zirkuliert; und
eine Umwälzpumpe (9), die im Heizmedium-Zirkulationskreislauf (3) angeordnet ist und das Heizmedium fördert,
wobei der Kältemittelkreislauf (2) und der Heizmedium-Zirkulationskreislauf (3) in einem Außengehäuse (1) vorgesehen sind,
**dadurch gekennzeichnet, dass**
der Heizmedium-Zirkulationskreislauf (3) mit einem Filter (25) versehen ist, der Verunreinigungen auffängt, und
das Außengehäuse (1) eine Öffnung (22), die an einer dem Filter (25) gegenüberliegenden Stelle vorgesehen ist, und eine Öffnungs- und Verschlussplatte (23) aufweist, die die Öffnung (22) abdeckt und die an dem Außengehäuse (1) anbringbar oder von diesem abnehmbar ist,
wobei die Wärmepumpen-Warmwasserheizung ferner ein Filtermontageteil (20) umfasst, an dem der Filter (25) montiert ist,
wobei eine erste Heizmediumleitung (32) und eine zweite Heizmediumleitung (32), die den Heizmedium-Zirkulationskreislauf (3) bilden, mit einem ersten Endteil bzw. einem zweiten Endteil des Filtermontageteils (20) verbunden sind,
die erste Heizmediumleitung (32) und die zweite Heizmediumleitung (32) mit Presspassung und koaxial in Reihe mit dem Filtermontageteil (20) verbunden sind,
das Filtermontageteil (20) ein Filteraufnahmeteil (24), das den Filter (25) aufnimmt, und einen Heizmediumströmungsdurchlass (33), in dem das Heizmedium strömt, umfasst,
das Filteraufnahmeteil (24) aus dem Heizmediumströmungsdurchlass (33) hervorsteht, und das Filteraufnahmeteil (24) an einer Öffnungsseite des Außengehäuses (1) positionierbar ist, indem das Filtermontageteil (20) bezüglich der ersten Heizmediumleitung (32) und der zweiten Heizmediumleitung (32) gedreht wird.

2. Wärmepumpen-Warmwasserheizung nach Anspruch 1, wobei in dem Filteraufnahmeteil (24) ein Magnet (31) vorgesehen ist.

## Revendications

1. Chauffage à eau chaude par pompe à chaleur comprenant :
un circuit de fluide frigorigène (2) conçu par le raccordement d'un compresseur (5), d'un échangeur de chaleur à agent de refroidissement à eau (6), d'un dispositif de réduction de pression (7) et d'un évaporateur (4) ;
un circuit de circulation d'agent chauffant (3) dans lequel un agent chauffant chauffé par l'échangeur de chaleur à agent de refroidissement à eau (6) circule ; et
une pompe de circulation (9) qui est disposée dans le circuit de circulation d'agent chauffant (3) et qui transporte l'agent chauffant,
le circuit de fluide frigorigène (2) et le circuit de circulation d'agent chauffant (3) étant disposés dans un boîtier extérieur (1),
**caractérisé en ce que**
le circuit de circulation d'agent chauffant (3) est pourvu d'un filtre (25) qui collecte des impuretés et
le boîtier extérieur (1) présente une ouverture (22) disposée en une position orientée vers le filtre (25) et une plaque d'ouverture et de fermeture (23) qui recouvre l'ouverture (22) et qui est fixée au boîtier extérieur (1) ou détachée de celui-ci,
le dispositif de chauffage à eau chaude par pompe à chaleur comprenant en outre une pièce de montage de filtre (20) sur laquelle le filtre (25) est monté,
un premier tuyau d'agent chauffant (32) et un deuxième tuyau d'agent chauffant (32), qui constituent le circuit de circulation d'agent chauffant (3) étant raccordés respectivement à une première partie d'extrémité et à une deuxième partie d'extrémité de la pièce de montage de filtre (20),
le premier tuyau d'agent chauffant (32) et le deuxième tuyau d'agent chauffant (32) étant ajustés par pression et raccordés coaxialement en série à la pièce de montage de filtre (20),
la pièce de montage de filtre (20) incluant une pièce de stockage de filtre (24) qui stocke le filtre (25) et un passage d'écoulement d'agent chauffant (33) dans lequel s'écoule l'agent chauffant,
la pièce de stockage de filtre (24) faisant saillie à partir du passage d'écoulement d'agent chauffant (33) et la pièce de stockage de filtre (24) pouvant être positionnée au niveau d'un côté d'ouverture du boîtier extérieur (1) par rotation de la pièce de montage de filtre (20) par rapport au premier tuyau d'agent chauffant (32) et au deuxième tuyau d'agent chauffant (32).

2. Chauffage à eau chaude par pompe à chaleur selon la revendication 1, dans lequel un aimant (31) est prévu dans la pièce de stockage de filtre (24).
